# EUROPEAN PATENT SPECIFICATION

(11) **EP 2 195 767 B1**
(45) Date of publication and mention of the grant of the patent: **06.04.2016**
(21) Application number: 08787763.5
(22) Date of filing: 04.09.2008
(51) Int. Cl.: G06K 19/07, E05B 67/00, G06K 19/077

(54) **RFID TRANSPONDER AND METHOD**
RFID-TRANSPONDER UND VERFAHREN
TRANSPONDEUR RFID ET PROCÉDÉ

(30) Priority: 05.09.2007 US 935889 P; 28.01.2008 US 6697 P
(43) Date of publication of application: 16.06.2010
(73) Proprietor: Confidex Oy, 33900 Tampere (FI)
(72) Inventor: RITAMÄKI, Matti, 37100 Nokia (FI)
(74) Representative: Kolster Oy Ab
(86) International application number: PCT/FI2008/050490
(87) International publication number: WO 2009/030816

(56) References cited:
- EP-A2- 1 063 627
- WO-A1-2004/008420
- WO-A1-2006/066555
- WO-A1-2007/096789
- WO-A1-2008/118676
- WO-A2-2007/025024
- US-A- 6 104 291
- US-A1- 2004 160 233
- US-A1- 2005 073 406
- US-A1- 2005 180 566
- US-A1- 2005 231 365
- US-A1- 2005 263 602
- US-A1- 2006 163 368

## Description

### FIELD OF THE INVENTION

The present invention relates to a seal comprising an RFID transponder, wherein the RFID transponder comprises an RFID module including an IC and a matching and coupling elements, and a plastic enclosure, an electromagnetic transmission line coupled to the IC, wherein the mechanism of the seal includes a bolt making at least a part of the transmission line.

### BACKGROUND OF THE INVENTION

Padlocks and seals are traditionally used for identify certain objects and for authentication. A padlock or a seal should prevent copying of objects, such as containers, various metal carts, etc. Padlocks or seals should be difficult to copy and impossible to open without any visual damage.

US 7878561 discloses a padlock comprising a transponder module wherein the hook is a part of the antenna.

US 20050263602 discloses an electronic seal including an identification circuit, e.g. RFID tag.

In padlocks, there is a lock mechanism designed such a way that it can't be opened. The lock should have a very strong mechanism so strong that the padlock does not fall off in normal use, but on the other hand, it should break down easily if anyone tries to open it. Therefore, two separate locking mechanisms are used: one is made of metal and the other is made of plastic. The plastic one should break down if anyone tries to steal the padlock.

The padlocks have many details, which are difficult to copy. Metal parts have some sophisticated markings. Plastic parts have details, which makes the injection moulding difficult and expensive. They have also some identification information like barcode and a visual number. Even though the padlock has several security features, it is possible to copy. An RFID transponder can be used to prevent copying and also for automatic tracking in logistics.

The RFID transponder has microchip or IC, which has logic circuitry and memory. A unique identification number is stored to the IC memory. Copying of such IC is extremely difficult and expensive. The RFID transponder requires an antenna, which is used to collect energy from reader field. The antenna also transmits and receives data between RFID IC and the reader device. The efficiency of the antenna will have a direct effect on the range of identifying the RFID transponder.

Padlocks and seals have some metal parts in order to achieve a sufficiently strong structure. The metal parts may be so large, that there is no room for an actual RFID tag antenna. If a properly working antenna is integrated in the padlock or the seal, its size becomes very large. The increased size will make the padlock or the seal more vulnerable for mechanical impacts. A large padlock or seal may be stuck more easily in various positions, and the locking mechanism becomes very expensive.

### BRIEF DESCRIPTION OF THE INVENTION

An object of the present invention is thus to provide an RFID transponder so as to alleviate the above disadvantages. The objects of the invention are achieved by an RFID transponder and a method, which are characterized by what is stated in the independent claims. The preferred embodiments of the invention are disclosed in the dependent claims. It is to be noted that padlocks do not fall within the scope of the claims. The embodiments disclosed in this description concerning padlocks do not for part of the invention but represent background art that is useful for understanding the invention.

The invention is based on the idea of replacing the large antenna of a conventional RFID transponder by a tiny RFID module. The RFID module is attached to the metal parts of a seal, and the RFID transponder utilizes the metal object in which it is attached as an antenna.

An advantage of the RFID transponder of the invention is that only minor changes for the mechanics of seals are needed. The size of the seal remains practically same.

### BRIEF DESCRIPTION OF THE DRAWINGS

In the following the invention will be described in greater detail by means of preferred embodiments with reference to the attached [accompanying] drawings, in which
Figure 1 is a schematic view of two RFID transponders according to the invention attached to a flower tray;
Figure 2 is a schematic view of the invention;
Figure 3 is a schematic view of a second embodiment of the RFID transponder according to the invention in an open (before the attachment) and closed (after the attachment) position;
Figure 4 is a schematic view of the RFID transponder according to Figure 3 and its main components being separated;
Figure 5 is a schematic view of a third embodiment of the RFID transponder according to the invention;
Figure 6a is a schematic top-view of a fourth embodiment of the RFID transponder according to the invention shown above;
Figure 6b is a schematic side-view of the RFID transponder according to Figure 6a;
Figure 7 is a schematic cross-section of a fifth embodiment of the RFID transponder according to the invention prior to insertion of a hook;
Figure 8 is a schematic cross-section of the RFID transponder according to Figure 7 after insertion of the hook;
Figure 9 is a schematic cross-section of the RFID transponder according to Figure 7 in its locked position;
Figure 10 is a schematic flow-chart of an assembly process according to the invention;
Figure 11 is a schematic view of an inspection system used in the assembly process according to Figure 10;
Figure 12 is a schematic view of a sixth embodiment of the RFID transponder according to the invention; and
Figure 13a is a schematic view of a detail of an embodiment of the RFID transponder according to the invention;
Figure 13b is a schematic view of another detail of an embodiment of the RFID transponder according to the invention.

For the sake of clarity, the invention is shown simplified in the figures. Similar parts are marked with the same reference numbers.

### DETAILED DESCRIPTION OF THE INVENTION

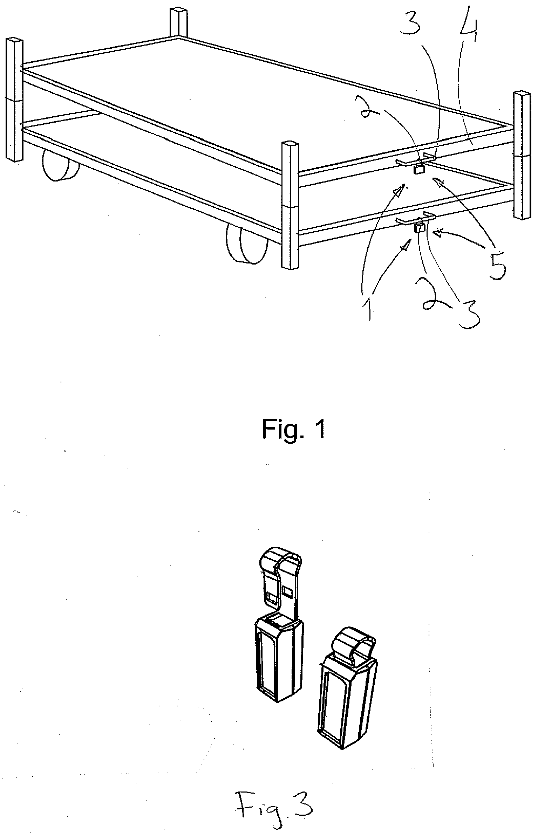

Figure 1 is a schematic view of two RFID transponders according to the invention attached to a metal cart used as a flower tray The RFID transponder is a padlock which comprises a steel hook 2. The steel hook 2 is attached to a special loop 3 of the flower tray. The loop 3 is fixed to a metal object 4, which is a steel body of the flower tray. The tray has also a plywood floor and wheels for moving.

The steel body of the flower tray (or any other metal object 4) acts like a large antenna. The size of the metal object 4 may be several wave-lengths. In this invention, the metal object is used as an antenna, and the pad-lock mechanism including the steel hook forms an electromagnetic transmission line 5 to an RFID module of the RFID transponder.

The RFID module of the RFID transponder 1 is attached to the end of the transmission line 5. In this embodiment the transmission line 5 consists of the steel hook 2 and the loop 3. The RFID module may have a galvanic connection to the transmission line 5, or it might couple capacitively or inductively.

The RFID module contains an RFID IC and a matching and coupling element. The matching element makes the RFID module resonate at a certain frequency. Typically, the capacitance of the IC has to be compensated for with the RFID module inductance.

The coupling element may be a plate capacitor or a galvanic connection. The transmission line 5 may couple directly to the inductance of the matching element.

The RFID transponder is preferably passive or semi-passive one. A passive RFID transponder does not have a battery or any other power supply. It takes required power from the radiated EM field of the reader device. In other words, it harvests all energy from the reader field. Therefore, the transponder has a long life cycle.

A semi-passive RFID transponder or battery assisted passive tag (BAP) has battery or some other power supply inside. The power supply improves performance of the RFID transponder, because logic and memory parts of the circuit can operate without taking energy from the reader field. This will enhance the reading distance and also improve reliability of identification because the link margin of the system is improved. Also sensors and other energy consuming features can be added to the semi-passive RFID transponder.

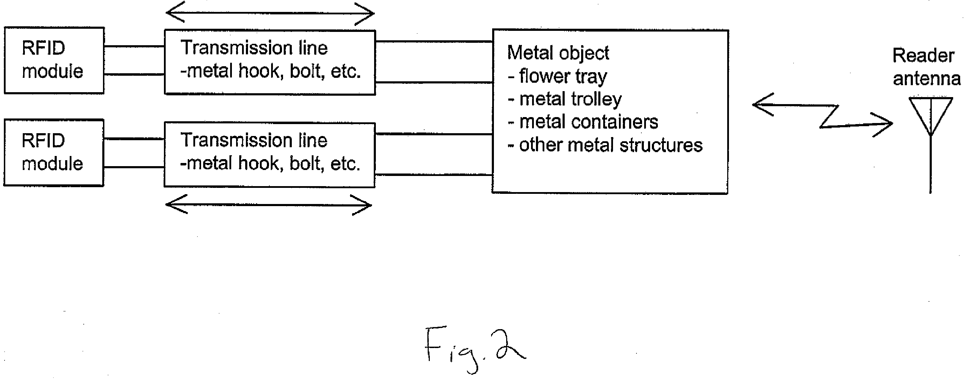

Figure 2 is a schematic view of the invention. As figure 2 shows, a metal object 4 can contain more than one RFID padlocks, since the RFID air interface protocol can handle collisions of communication. Due to this, several metal objects with an RFID padlock can be identified at the same time even though they are in a pile or are connected in another way.

The same RFID padlock, seal or module can be used in nearly any type of metal objects 4. The RFID module can be very small. This kind of an RFID transponder is not very frequency selective, because antenna is not usually resonating. The metal object 4 needs to be just large enough to collect required amount of energy from the reader field. The module may be far away from the reader antenna, if the transmission line 5 between the antenna, i.e. the metal object 4, and the RFID module is well optimized (low losses).

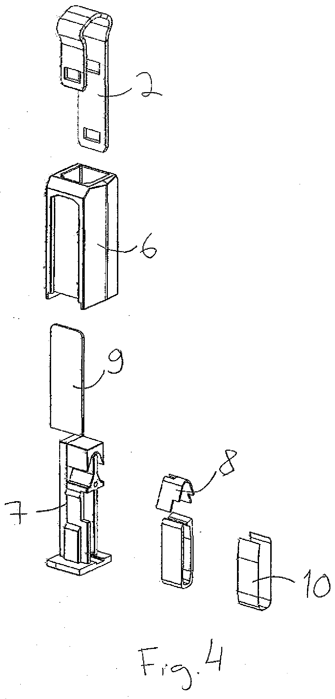

Figure 3 is a schematic view of a second embodiment of the RFID transponder according to the invention in an open (before the attachment) and closed (after the attachment) position, and Figure 4 is a schematic view of the RFID transponder according to Figure 3 and its main components being separated. The RFID transponder is a padlock-type one comprising a plastic enclosure 6 and a plastic core 7 arranged inside of the plastic enclosure 6. A hook 2 made of metal may be locked in a closed position with help of a locking spring 8. The above-mentioned mechanical structure of the RFID transponder is disclosed in document EP 1522058. The EP-document discloses a safety lock which comprises a hollow housing, a retention means and a closing bracket. Resilient snap means have been formed at the inside of the housing and/or at the retention means, which interlock the retention means with the housing in its inserted state. The safety lock further comprises snap means which are arranged between the retention means and the closing bracket which lock the closing bracket in its closed state with the retention means so that the safety lock cannot be opened without destroying it at the same time.

In addition to the above-mentioned mechanical structure, the RFID transponder 1 shown in figures 3 and 4 comprises a barcode and visual markings arranged on external surface of the RFID transponder, as well as a RFID module 10. The RFID module 10 is bend in a C-shape. It is clear that the RFID module 10 may also have some other shape.

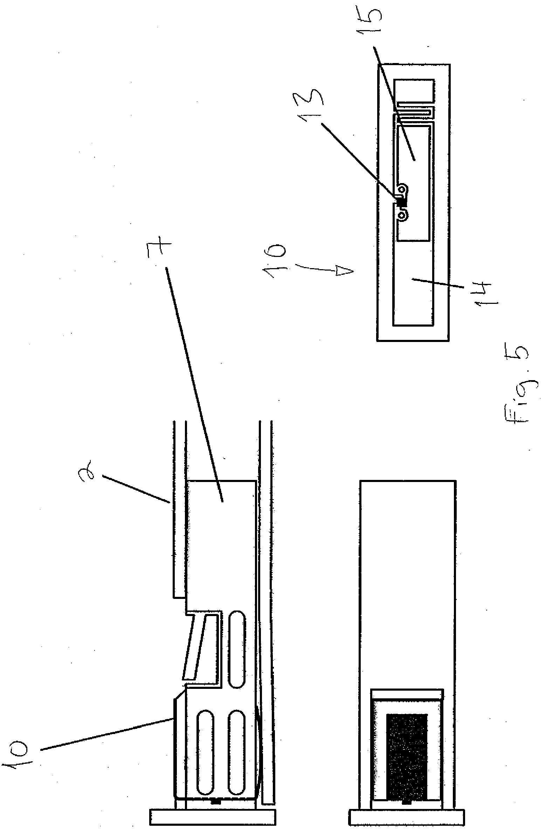

Figure 5 is a schematic view of a third embodiment of the RFID transponder according to the invention. An RFID module 10 is bend on a plastic core 7. The RFID module 10 comprises an IC 13, a coupling element 14 and an impedance matching element 15, all of which are known as such.

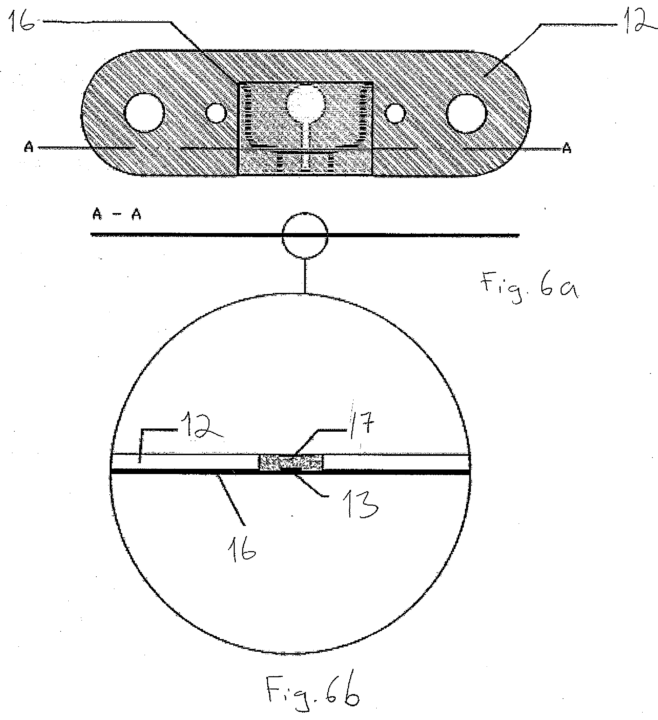

Figure 6a is a schematic top-view of a fourth embodiment of the RFID transponder according to the invention shown above and Figure 6b is a schematic side-view of the RFID transponder according to Figure 6a. Here the external metal object actually acting as a non-resonating but energy-harvesting antenna for the RFID module 10 is a so-called floor tag 11. The floor tag 11 is durable against mechanical impacts created by forklifts, etc. The tag 11 is created by using, for example, an external metal plate 12, the thickness of which may be 0.5 mm, as an antenna. The metal plate 12 can also be, for example, the plate connecting the shelf of the forklift to the floor. The RFID transponder comprises here a strap 16 and an IC 13 embedded in epoxy resin 17.

It is quite obvious that all metallic objects having a well-optimized (low loss) transmission line between the antenna, i.e. said metal object, and the RFID module, can be made RFID enabled.

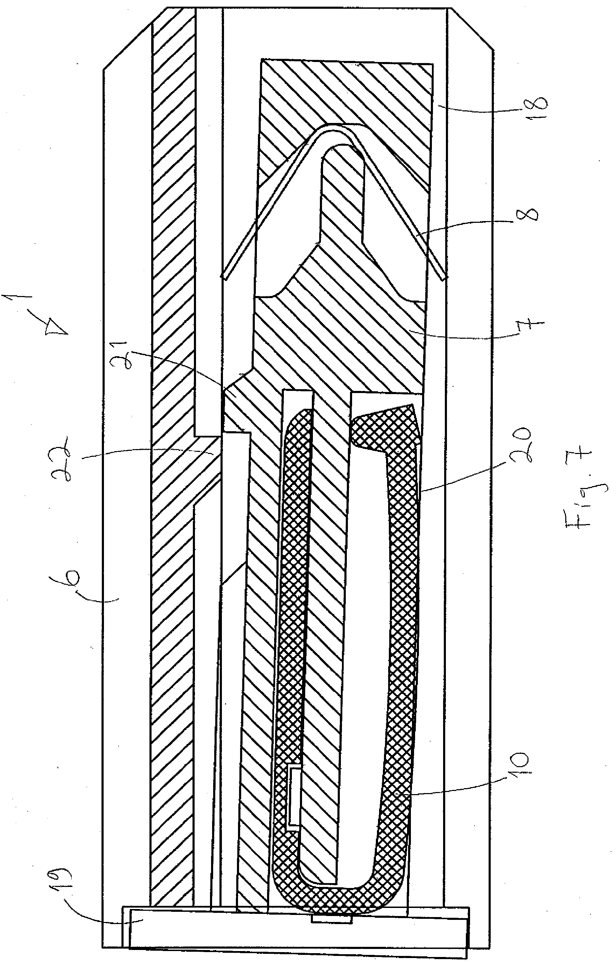

Figure 7 is a schematic cross-section of a fifth embodiment of the RFID transponder according to the invention prior to insertion of a hook.

The RFID transponder 1 comprises a hollow housing or enclosure 6, an inner part or core 7, a hook 2 and an RFID module 10. The RFID module 10 may be similar to the RFID module illustrated in Figures 4 and 5. The housing 6 and the inner part 7 may be made of a plastic material. The hook 2 is usually made of a metal material.

Figure 7 shows the cross-section of a padlock-type RFID transponder 1 without the hook 2. The padlock comprises a housing 6 and an inner part 7 that has been pushed inside a canal 18 in the housing 6. The inner part 7 comprises a bottom part 19 that is larger than the cross-section of the canal 18 so that the bottom part 19 acts as a stopper.

The inner part 7 also comprises a support structure 20 for an RFID module 10. The RFID module 10 is, for instance, adhered on the surface of the support structure 20. The support structure 20 is preferably made of plastic and has an elastic structure arranged to press the RFID module 10 against the hook 2. A first locking means or locking spring 8 is a separate part or it has been integrated in the inner part 7. The first locking means 8 may be made of a plastic material or a metallic material. The canal 18 of the housing is larger in size than the inner part 7. Thus, the inner part 7 can be inserted inside the canal 18 so that the first locking means 8 and a first part of a rigid arresting means, in this case a rigid (i.e. non-deformable and static) shoulder 21, bypass a second part of a rigid arresting means, in this case a shoulder 22 formed inside the housing 6.

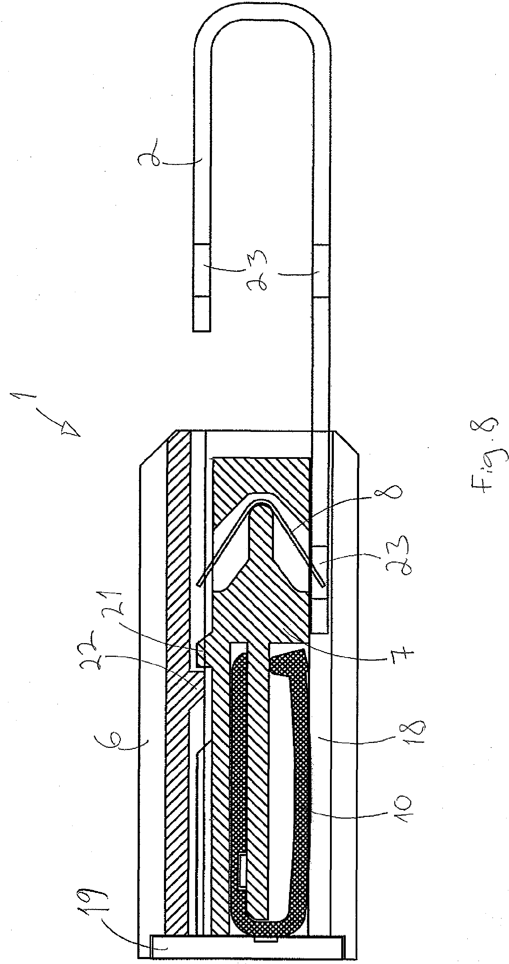

Figure 8 is a schematic cross-section of the RFID transponder according to Figure 7 after insertion of the hook 2. Figure 8 shows a situation where the hook 2 has been inserted in the canal 18 but the padlock is still in an unlocked state. The hook 2 pushes the inner part 7 sidewards so that the shoulders 21 and 22 intermesh. Thus, the inner part 7 cannot any longer move backwards because the shoulders 21, 22 maintain the inner part 7 inside the housing 6. The hook 2 comprises second locking means 23, which form counterparts to the first locking means 8.

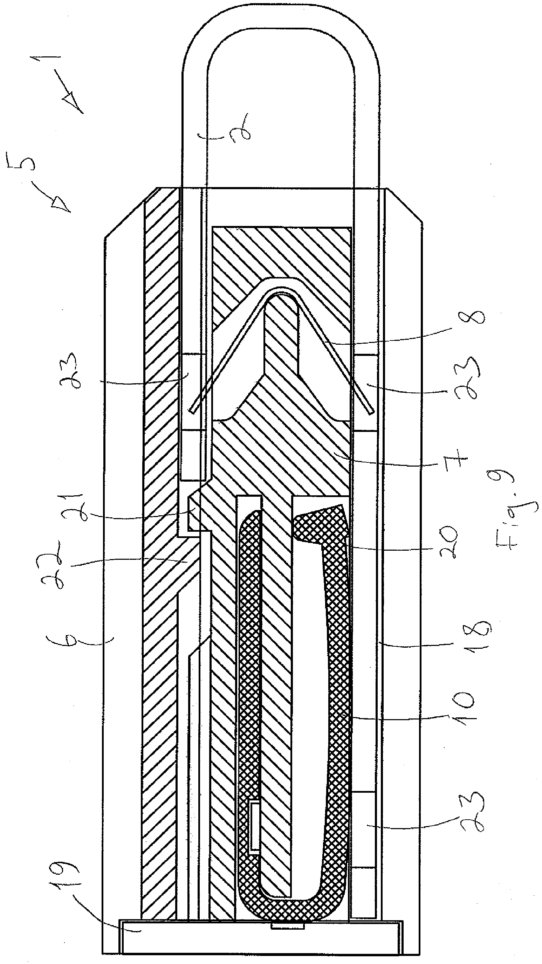

Figure 9 is a schematic cross-section of the RFID transponder according to Figure 7 in its locked position. The hook 2 locks the padlock by the first locking means 8 and the second locking means 23. A transmission line 5, including the hook 2, connects the RFID module 10 to a metal object in which the hook has been attached. The metal object functions as an antenna or a part of an antenna of the RFID transponder 1. It is to be noted that the metal object is not shown in Figure 9.

In addition to the above described and illustrated padlock, there may be a padlock that comprises, instead of shoulders 21, 22, arresting means, which comprise a pin and a hole or a recess. The pin penetrates into the hole when the hook 2 pushes the inner part 7 sideward. The pin may be situated on the inner part 7 and the hole/recess inside the housing 6 or vice versa.

Further, there may be a padlock which does not comprise arresting means inside the housing 6 but a hook 2 is shaped so that it prevents sliding of the inner part 7 when the padlock is in its closed position. For example, the part of the hook 2 that remains outside the housing 6 when the padlock has been closed may be wider than the diameter of the canal 18 so that the hook 2 cannot slide through the canal 18. Thus the shape of the hook forms the arresting means. In order to prevent sliding of the inner part 7 before the hook 2 is locked the bottom part 19 may be attached to the housing 6 by an adhesive or by ultrasonic welding.

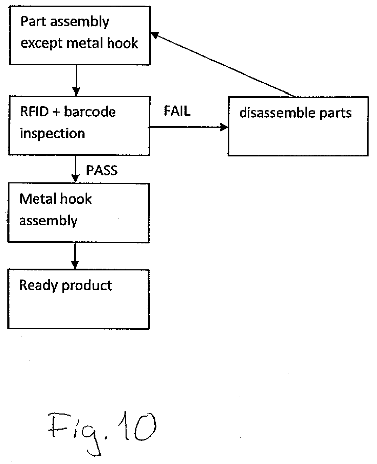

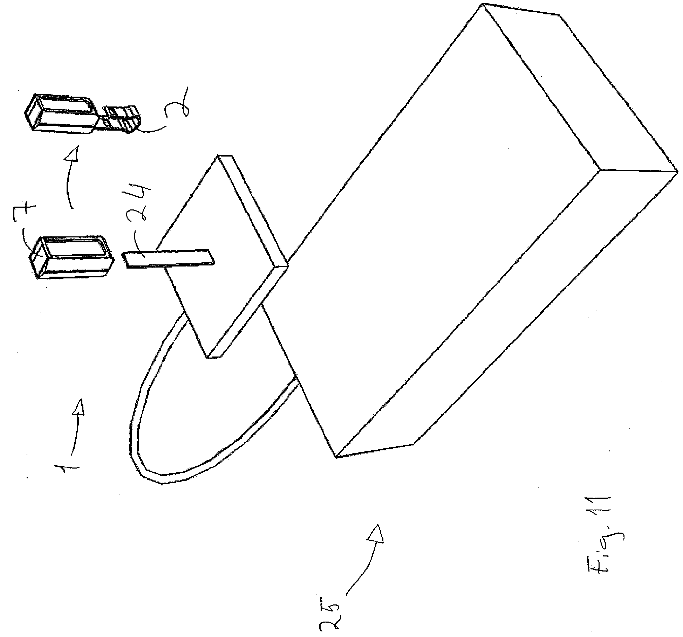

Figure 10 is a schematic flow-chart of an assembly process according to the invention, and Figure 11 is a schematic view of an inspection system used in the assembly process according to Figure 10.

An RFID padlock or seal is a safety lock that comprises a mechanical seal resulting from its mechanical structure and an RFID function resulting from an RFID module inside the safety lock.

With the RFID padlocks or seals it is not desirable to have such a padlock whose retention means or locking means sticks inside the housing once they are inserted in the housing because the RFID functionality testing and encoding and barcode inspection is done after said insertion. If the RFID part or barcode is broken during the manufacturing process, then valuable plastic and metal parts are also lost.

Therefore, the inner part of the RFID transponder according to an embodiment of the invention is not locked in its place permanently once it has been inserted inside the housing. This kind of padlocks is shown in Figures 7-9.

In Figure 11 it is shown an example of an inspection system that may be used in above-mentioned inspection.

Plastic parts, such as the housing or enclosure 6 and the core or inner part 7 are locked together just after the hook 2 is assembled. All said parts can be separated before the hook 2 is assembled. After the hook 2 is added all said parts are locked together permanently. The inspection of the RFID module and barcode is done before inserting the hook 2. This is the last phase where inspection can be done because after the hook 2 has been inserted it is not possible to get physical contact with the RFID module 10. In Figure 11 the physical contact is arranged by a electrically conductive strip 24. Said strip 24 is inserted into the canal 18 where it comes into contact with the RFID module 10 either directly or through a part of the transmission line. The strip 24 is connected to an RFID reader 25 that is connected to testing software.

The benefit is that if the barcode or the RFID module 10 is broken it can be replaced by another barcode or RFID module 10. This will minimize the waste of the material.

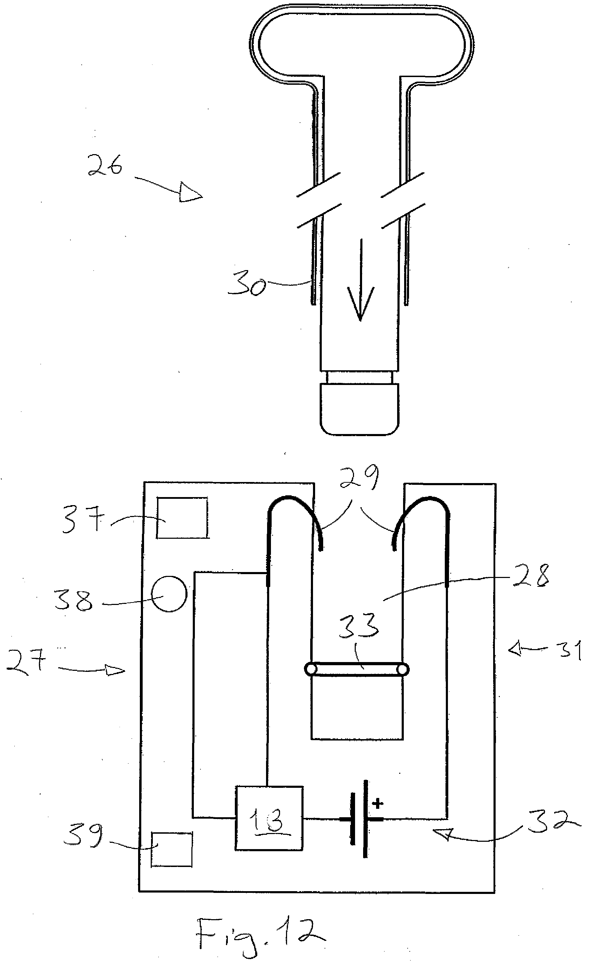

Figure 12 is a schematic view of a sixth embodiment of the RFID transponder according to the invention.

Bolt and wire seals are commonly used in sea containers. Tamper evident seals prevent unauthorized opening of container doors. When the contained door is opened, the seal has to be break. The seal has to be inspected visually, which is very time consuming. Automatic inspection of seal is difficult and expensive to implement.

Security, usability and performance of a padlock, bolt and wire seals can be improved by adding an RFID module therein. For example, conventional RFID enabled seals (disclosed, for instance, in WO2006074518A1) have a separate antenna, which will make the size of seal bigger. Mechanical strength of sea container seal is defined by ISO standard ISO 17712. These requirements are difficult to obtain with conventional, big sized RFID seals.

An embodiment of the invention maintains mechanical durability and size of currently used and field proven seals. Small size can be maintained by exploiting the properties of the object where it is attached. Sea containers, flower containers, roll cages, or some other metal objects may act as an antenna, which collects radio waves from a reader field. Said energy will be guided to the IC 13 of the RFID module inside the seal. Metal hook 2 or bolt 26 shown in Figure 12 acts as a transmission line 5 between the metal object and circuitry 27 of the RFID transponder 1. The circuitry 27 is designed such a way that electromagnetic coupling between hook 2 or bolt 26 and the RFID module 10 is as high as possible. Impedance matching circuitry for IC is also usually required. The coupling can be galvanic, capacitive or inductive. A simple plate capacitor is one preferred example of the simplest coupling elements.

In an embodiment of the innovation, the RFID module 10 of the seal or lock will active when it is closed. Coupling between transmission line 5 and RFID inlay part is very weak when the lock or seal is open, i.e. in the embodiment shown in Figure 12, when the bolt 26 is not pushed into receptive space 28. Therefore the reading distance of the RFID transponder 1 is very short or even zero when the seal is open.

As the lock or seal is closed, i.e. the bolt 26 is pushed into receptive space 28, two contacts 29 come into contact with an electrically conductive DC path 30. Thereby, a galvanic connection and coupling between the RFID module 10 and the metal object being in contact with the bolt 26 and functioning as the antenna of the RFID transponder 1 is closed through one of said two contacts 29. It is clear that the transmission line 5 can also be closed through a capacitive connection between the bolt 26 and the circuitry 27. In the latter case, a battery connection of a BAP tag has to be established by a galvanic connection.

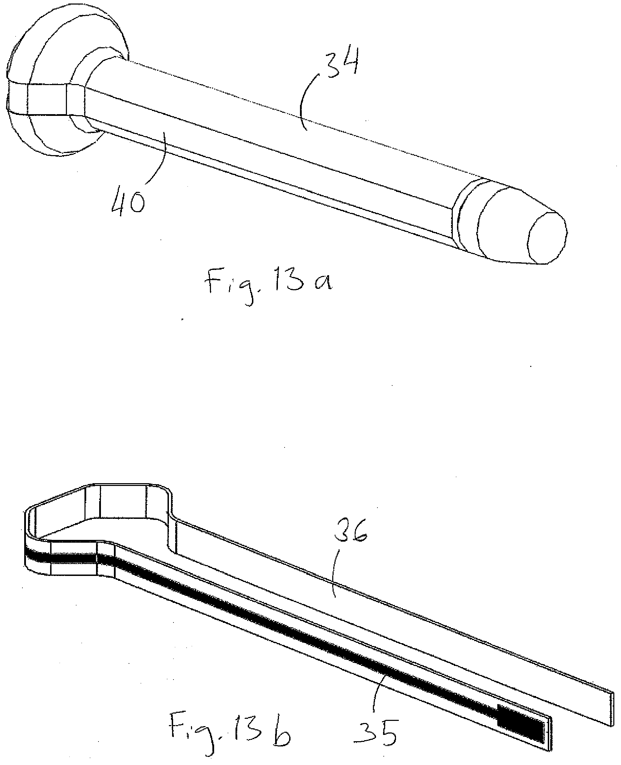

A battery connection has to be established in BAP tags. Conventionally, a battery 32 will be connected when tag is produced. This might reduce lifetime of the tag since IC consumes energy all the time. In an embodiment of the innovation, the battery connection is established when the lock or seal is closed. As discussed earlier, the body part 31 of the seal or lock comprises two contacts 29, which need to have DC connection in order to power up the IC. First contact 29 is grounded and second contact 29 is connected with a positive pole of the battery 32. One of the contacts can act as antenna connection as described above. It is also possible that a separate contact for the transmission line 5 is arranged, for instance, through a metal core 34 shown in Figure 13a.

The bolt 26 is locked permanently to body part 31 when the seal is closed. There is a spring mechanism 33 inside the body part 31. The spring mechanism 33 prevents the bolt 26 slide out from the receptive space 28.

A BAP sensor tag can be used, for instance, in cold chain for monitoring temperature. Memory of the sensor tag can be downloaded when it is received. This would guarantee, for example, the quality of fresh food. Sensor tag can have a real time clock 38, so every measurement can have a time stamp. The tag can have also additional sensors 37, for example a temperature sensor, a humidity sensor, an accelerator sensor, a shock sensor, and a vibration sensor. It may monitor opening and closing time of the container door. Shock sensor can be used to indicate drops and hits. The real time clock 38 and the additional sensors 37 are separate components or chips in the embodiment shown in Figure 12. It is clear that the real time clock 38 as well as some of or all the additional sensors 37 can also be arranged in the IC 13.

Figure 13a is a schematic view of a detail of an embodiment of the RFID transponder according to the invention. The bolt 26 is designed such a way that it has a metal core 34, which will provide required mechanical strength for the seal. The DC path 30 shown in Figure 12 is arranged with a separate wire structure 35 on the metal core 34. The wire structure 35 that is shown in Figure 13b is made of a thin wire, for instance, of thin etched aluminum on a plastic substrate 36. The plastic substrate 36 can be attached, for instance by adhesive, to a surface 40 purposely made for the attachment. The plastic substrate 36 is situated between the metal core 34 and the wire structure 35. A very thin twisted wire can be used as the wire structure 35. The wire has to be difficult to repair, because that would make the seal tamper evident. If the wire is broken, then it can be assumed that it is opened. This way an automatic inspection of seals may be enabled.

The bolt 26 can be manufactured, for instance, by adding the metal core 34 as an insert in an injection molding mold. The wire structure 35 can also be inserted in the mold. The wire structure 35 can also be molded inside a plastic shell, thus making it even more difficult to repair after tampering. The plastic shell will be an additional security feature, because cracks in plastic shell will indicate tampering.

Commercially available semi-passive chips (for example EM4324 from EM Microelectronic) have one bit or register that indicates if the battery is connected or not. By reading the state of this bit, the condition of the seal can be inspected. This bit indicates only current status. If the battery connection of seal is repaired after tampering, it is possible to go around the automatic seal inspection. In an embodiment of the invention, the lock or seal can be made more tampering evident by implementing additional features to IC. For example, a battery indicator can be stored to EEPROM, when it is not initialized after repairing the battery connection. For example, an air interface protocol of ISO 18000-6C provides password protection for a tag memory. The battery level indicator can be stored to a password protected part of the memory 39. An authorized user will initialize this indicator after the seal is closed. If the battery connection fails, the state of the indicator will change and remain changed even though the battery connection is repaired again. If the tag has a real time clock, then also a time stamp of tampering can be stored to the memory 39. Instead of using the battery contact as an indicator, a separate input connection can be used to indicate tampering. It works same way as described above. The memory 39 may be situated outside the IC 13, or in the IC 13.

It will be obvious to a person skilled in the art that, as the technology advances, the inventive concept can be implemented in various ways. The invention and its embodiments are not limited to the examples described above but may vary within the scope of the claims.

## Claims

1. A seal comprising an RFID transponder, wherein the RFID transponder comprises an RFID module (10) including an IC (13) and matching and coupling elements (14, 15), and a plastic enclosure (6), an electromagnetic transmission line (5) coupled to the IC (13), wherein the mechanism of the seal includes a bolt (26) making at least a part of the transmission line (5), **characterized in that** said electromagnetic transmission line (5) is capable of making a galvanic, a capacitive or an inductive coupling between the IC (13) and an external metal object (4) so that said external metal object (4) is able to function as an antenna of the RFID transponder (1).

2. The seal according to claim 1, **characterized in that** the transmission line (5) is arranged to be disconnected when the seal mechanism is open, and that said transmission line (5) is closed as the bolt (26) is locked in a receptive space (28) of a body part (31) of the seal.

3. The seal as claimed in any one of the preceding claims, **characterized in that** the RFID transponder (1) is passive one.

4. The seal as claimed in any one of claims 1 to 2, **characterized in that** the RFID transponder (1) is semi-passive one.

5. The seal as claimed in any one of the preceding claims, **characterized in that** the RFID module (10) is bend to a C-shape.

6. The seal as claimed in any one of the preceding claims, **characterized in that** it comprises an inner part (7) arranged inside a canal (18) in the housing (6), the inner part (7) comprising a bottom part (19) that is larger than the cross-section of the canal (8), The diameter of the canal (18) being larger than the outer diameter of the inner part (7), and that the inner part (7) comprises a first part of a rigid arresting means and the housing (6) comprises a second part of the rigid arresting means, that the hook (2) or the bolt (26) in a locked state is pushing the inner part (7) sideward such that the first part of the rigid arresting means and the second part of the rigid arresting means intermesh.

7. The seal as claimed in any one of the preceding claims, **characterized in that** the bolt (26) comprises a metal core (34), and that the transmission line (5) is arranged with a separate wire structure (35) on said metal core (34).

8. The seal as claimed in any one of the preceding claims, **characterized in that** it comprises a memory (39), at least part of which is password-protected, an indicator for tampering stored in the password-protected part of the memory (39), and means for changing the state of the indicator as tampering takes place.

9. The seal as claimed in claim 8, **characterized in that** the indicator is a battery indicator the state of which is arranged to change when a battery-connection fails.

10. A process for assembling a seal as claimed in claims 1 to 9 and an external metal object (4) so that said external metal object (4) is able to function as an antenna of the RFID transponder (1), **characterized by**
inspection of the RFID module (10) before arranging said electromagnetic transmission line (5), and
assembling the electromagnetic transmission line (5) in the RFID transponder (1) in the case the RFID module (10) has passed the inspection.

## Patentansprüche

1. Siegel, umfassend einen RFID-Transponder, wobei der RFID-Transponder ein RFID-Modul (10) umfasst, das einen IC (13) und Anpass- und Koppelelemente (14, 15) und ein Kunststoffgehäuse (6), eine elektromagnetische Übertragungsleitung (5), die mit dem IC (13) gekoppelt ist, umfasst, wobei der Mechanismus der Dichtung einen Bolzen (26) umfasst, der mindestens einen Teil der Übertragungsleitung (5) bildet, **dadurch gekennzeichnet, dass** die elektromagnetische Übertragungsleitung (5) fähig ist, eine galvanische, eine kapazitive oder eine induktive Kopplung zwischen dem IC (13) und einem externen Metallobjekt (4) herzustellen, sodass das externe Metallobjekt (4) als eine Antenne des RFID-Transponders (1) fungieren kann.

2. Siegel nach Anspruch 1, **dadurch gekennzeichnet, dass** die Übertragungsleitung (5) derart angeordnet ist, dass sie getrennt ist, wenn der Siegelsmechanismus offen ist, und dass die Übertragungsleitung (5) geschlossen ist, währende der Bolzen (26) in einem Aufnahmeraum (28) eines Körperteils (31) des Siegels verriegelt ist.

3. Siegel nach einem der vorstehenden Ansprüche, **dadurch gekennzeichnet, dass** der RFID-Transponder (1) passiv ist.

4. Siegel nach einem der Ansprüche 1 bis 2, **dadurch gekennzeichnet, dass** der RFID-Transponder (1) semi-passiv ist.

5. Siegel nach einem der vorstehenden Ansprüche, **dadurch gekennzeichnet, dass** das RFID-Modul (10) zu einer C-Form gebogen ist.

6. Siegel nach einem der vorstehenden Ansprüche, **dadurch gekennzeichnet, dass** es einen Innenteil (7) umfasst, der innerhalb eines Kanals (18) in dem Gehäuse (6) angeordnet ist, wobei der Innenteil (7) einen Unterteil (19) umfasst, der größer ist als der Querschnitt des Kanals (8), der Durchmesser des Kanals (18) größer ist als der Außendurchmesser des Innenteils (7), und dadurch dass der Innenteil (7) einen ersten Teil eines starren Arretiermittels umfasst und das Gehäuse (6) einen zweiten Teil des starren Arretiermittels umfasst, dass der Haken (2) oder der Bolzen (26) in einem verriegelten Zustand den Innenteil (7) seitwärts schiebt, sodass der erste Teil des starren Arretiermittels und der zweite Teil des starren Arretiermittels ineinandergreifen.

7. Siegel nach einem der vorstehenden Ansprüche, **dadurch gekennzeichnet, dass** der Bolzen (26) einen Metallkern (34) umfasst und dass die Übertragungsleitung (5) mit einer getrennten Drahtstruktur (35) auf dem Metallkern (34) angeordnet ist.

8. Siegel nach einem der vorstehenden Ansprüche, **dadurch gekennzeichnet, dass** es einen Speicher (39) umfasst, von dem mindestens ein Teil passwortgeschützt ist, einen Manipulationsindikator, der in dem passwortgeschützten Teil des Speichers (39) gespeichert ist, und Mittel zum Ändern des Zustands des Indikators, wenn eine Manipulation erfolgt.

9. Siegel nach Anspruch 8, **dadurch gekennzeichnet, dass** die Anzeige eine Batterieanzeige ist, deren Zustand derart ausgeführt ist, dass er sich ändert, wenn ein Batterieanschluss versagt.

10. Verfahren zum Herstellen eines Siegels nach den Ansprüchen 1 bis 9 und eines externen Metallobjekts (4), sodass das externe Metallobjekt (4) als eine Antenne des RFID-Transponders (1) fungieren kann, **gekennzeichnet durch** Überprüfen des RFID-Moduls (10) vor dem Anordnen der elektromagnetischen Übertragungsleitung (5) und Herstellen der elektromagnetischen Übertragungsleitung (5) in dem RFID-Transponder (1), wenn das RFID-Modul (10) die Überprüfung bestanden hat.

## Revendications

1. Sceau comprenant un transpondeur RFID, dans lequel le transpondeur RFID comprend un module RFID (10) comprenant un IC (13) et des éléments de correspondance et de couplage (14, 15) et une enceinte en plastique (6), une ligne de transmission électromagnétique (5) couplée au IC (13), dans lequel le mécanisme du sceau comprend un boulon (26) réalisant au moins une partie de la ligne de transmission (5), **caractérisé en ce que** ladite ligne de transmission électromagnétique (5) est capable de réaliser un couplage galvanique, capacitif ou inductif entre le IC (13) et un objet métallique externe (4), de sorte que ledit objet métallique externe (4) peut servir d'antenne du transpondeur RFID (1).

2. Sceau selon la revendication 1, **caractérisé en ce que** la ligne de transmission (5) est agencée pour être déconnectée lorsque le mécanisme de sceau est ouvert, et **en ce que** ladite ligne de transmission (5) est fermée lorsque le boulon (26) est bloqué dans un espace de réception (28) d'une partie de corps (31) du sceau.

3. Sceau selon l'une quelconque des revendications précédentes, **caractérisé en ce que** le transpondeur RFID (1) est un transpondeur passif.

4. Sceau selon l'une quelconque des revendications 1 à 2, **caractérisé en ce que** le transpondeur RFID (1) est un transpondeur semi-passif.

5. Sceau selon l'une quelconque des revendications précédentes, **caractérisé en ce que** le module RFID (10) est plié en forme de C.

6. Sceau selon l'une quelconque des revendications précédentes, **caractérisé en ce qu'**il comprend une partie interne (7) agencée à l'intérieur d'un canal (18) dans le boîtier (6), la partie interne (7) comprenant une partie inférieure (19) qui est plus grande que la section transversale du canal (8), le diamètre du canal (18) étant supérieur au diamètre externe de la partie interne (7), et **en ce que** la partie interne (7) comprend une première partie d'un moyen d'arrêt rigide et le boîtier (6) comprend une seconde partie du moyen d'arrêt rigide, de sorte que le crochet (2) ou le boulon (26) dans un état bloqué, pousse la partie interne (7) latéralement de sorte que la première partie du moyen d'arrêt rigide et la seconde partie du moyen d'arrêt rigide s'engrènent.

7. Sceau selon l'une quelconque des revendications précédentes, **caractérisé en ce que** le boulon (26) comprend un noyau métallique (34), et **en ce que** la ligne de transmission (5) est agencée avec une structure de fil séparée (35) sur ledit noyau métallique (34).

8. Sceau selon l'une quelconque des revendications précédentes, **caractérisé en ce qu'**il comprend une mémoire (39), dont au moins une partie est protégée par un mot de passe, un indicateur de violation stocké dans la partie protégée par un mot de passe de la mémoire (39) et un moyen pour modifier l'état de l'indicateur lorsqu'une violation a lieu.

9. Sceau selon la revendication 8, **caractérisé en ce que** l'indicateur est un indicateur de batterie, dont l'état est agencé pour changer lorsqu'une connexion de batterie présente une défaillance.

10. Procédé pour assembler un sceau selon les revendications 1 à 9 et un objet métallique externe (4) de sorte que ledit objet métallique externe (4) peut servir d'antenne pour le transpondeur RFID (1), **caractérisé par** les étapes consistant à
contrôler le module RFID (10) avant d'agencer ladite ligne de transmission électromagnétique (5), et
assembler la ligne de transmission électromagnétique (5) dans le transpondeur RFID (1) dans le cas où le module RFID (10) a réussi le contrôle.
